# EUROPEAN PATENT SPECIFICATION

(11) **EP 2 295 275 B1**
(45) Date of publication and mention of the grant of the patent: **18.06.2014**
(21) Application number: 10175532.0
(22) Date of filing: 07.09.2010
(51) Int. Cl.: B60K 7/00, F03C 1/24

(54) **Wheel suspension device, truck, and method for assembling a wheel suspension device**
Radaufhängungsvorrichtung, Lkw und Verfahren zur Anordnung einer Radaufhängungsvorrichtung
Dispositif de suspension de roue, camion et procédé d'assemblage d'un dispositif de suspension de roue

(30) Priority: 10.09.2009 NL 2003466
(43) Date of publication of application: 16.03.2011
(73) Proprietor: Loven Beheer B.V., 6433 KA Hoensbroek (NL)
(72) Inventor: Loven, Leonardus Wilhelmus Gerardus Maria, 3630 Maasmechelen (BE); Meessen, Pascal Joseph Johannes Elisabeth, 6447 BG Merkelbeek (NL); Hoeveler, Marcus Lambertus Hubertus Maria, 6181 KA Elsloo (NL)
(74) Representative: Nijs, Erik Anton Marie

(56) References cited:
- EP-A2- 0 645 298
- DE-A1- 2 625 327
- FR-A1- 2 379 394
- FR-A1- 2 926 854
- US-A- 3 557 661
- US-A- 5 148 885
- US-A- 5 188 382
- US-A- 5 836 231
- US-B2- 6 470 786

## Description

The invention relates to a wheel suspension device for a vehicle, such as a lorry, comprising:
- an axle body,
- a king pin,
- a stub axle having an inner side and an outer side, in which the stub axle, on its inner side, is hingedly connected to the axle body by means of the king pin, and in which the stub axle is provided with at least two fluid ducts which extend through the stub axle from the inner side to the outer side thereof
- a wheel hub, which is rotatably connected to the stub axle, and
- a hydraulic motor, which is provided on the outer side of the stub axle, in which the hydraulic motor is designed to drive the wheel hub with respect to the stub axle, and in which the hydraulic motor is in fluid communication with the fluid ducts.

DE29924730 discloses a lorry which has a main drive and an auxiliary drive which can be switched on/off. The main drive comprises a combustion engine which is connected to the rear wheels via a gearbox and a mechanical drive connection. The front wheels are each provided with a hydraulic motor to form the auxiliary drive. A hydraulic pump, which can be driven by the output shaft of the gearbox, is connected to the hydraulic motors via lines and fittings. The hydraulic motors are built into the wheel hub of the front wheels.

The front wheels of such a lorry are steerably connected to the front axle by means of a wheel suspension device. The wheel suspension device comprises an axle body, for example an end of the front axle, which, by means of a king pin, is hingedly connected to a stub axle on which a wheel hub is rotatably mounted. The king pin determines a steering axis which runs substantially vertically. The axis of rotation of the wheel hub runs substantially horizontally.

The hydraulic motor of each front wheel is fitted on the outer side of the stub axle, which is turned away from the king pin. In order to supply and discharge hydraulic fluid to the hydraulic motors, two fluid ducts are drilled through the stub axle, that is to say a supply duct and a discharge duct which each open on the inner side and outer side of the stub axle.

There is only little installation space between the king pin and the inner side of the stub axle. Therefore, the stub axle is provided on the inner side with an integrally formed connecting part which is situated in front of the king pin. The integrally formed connecting part is provided with connection openings for supplying hydraulic fluid via the supply duct and discharging it via the discharge duct.

By using the integrally formed connecting part, the stub axle is a modified moulded piece, which requires a tailor-made mould. In addition, if it is found, during maintenance, that the integrally formed connecting part has to be replaced, the entire stub axle will have to be replaced. Due to legislation, it may also be required to recertify the stub axle, by reason of the fact that the stub axle comprising the integrally formed connecting part is not a standard part. This results in relatively high costs.

US3557661 discloses a hydraulic cam motor, with one side fastened to a vehicle frame by bolts and nuts, and to its other side is mounted a conventional wheel and rim which carries a tire. The hydraulic cam motor has a rotating outer housing formed by end members and a cental annular member. The cam motor also comprises a stationary assembly which is formed by an inner hub, a cylinder block, and an outer hub.

US5188382, which is the closest prior art, discloses the mounting of a steerable vehicle wheel. A pin passes through the upper leg and the lower leg of a yoke. The pin is fitted into the bore of a head of an axle which fits between the legs of the yoke. The knuckle shaft carries a roller bearing of the wheel.

It is an object of the invention to provide an improved wheel suspension device.

According to the invention, this object is achieved by providing a connecting body which is fitted between the king pin and the inner side of the stub axle, in which the connecting body is a separate part, and in which the connecting body is provided with at least two through-passages, in which each of the through-passages is connected at an end thereof to in each case one of the fluid ducts of the stub axle and comprises, on the opposite end thereof, in each case one connection opening.

The fluid ducts in the stub axle comprise a supply duct and a discharge duct for supplying and discharging hydraulic fluid, respectively. The supply duct is connected to a first through-passage of the connecting body. The connection opening of the first through-passage forms an inflow opening. Hydraulic fluid can flow to the hydraulic motor on the outer side of the stub axle via the inflow opening, the first through-passage and the supply duct. The hydraulic fluid is discharged from the hydraulic motor via the discharge duct of the stub axle, which is connected to a second through-passage of the connecting body. The connection opening of the second through-passage forms an outflow opening. Incidentally, the direction of flow is reversed while driving forwards/backwards.

Since the connecting body is designed as a separate part, the parts of the wheel suspension device can remain substantially standard. The stub axle may, for example, remain unchanged with respect to the stub axle of a lorry without auxiliary drive, except for the fluid ducts in the stub axle. This means that the auxiliary drive can be built into the wheel suspension device of one of the axles of the lorry while mainly using the standard parts of said wheel suspension. The addition of the auxiliary drive is therefore relatively inexpensive.

A further advantage is the fact that, for example, when the connection openings have been damaged, not the entire stub axle, but only the connecting body which has been designed as a separate part, has to be replaced.

In one embodiment, the connecting body is formed by a substantially solid, block-shaped body which is provided with the through-passages. The connecting body is, for example, designed as a metal moulded piece into which the through-passages have been drilled. This is advantageous in terms of production engineering.

It is possible for the connecting body and the inner side of the stub axle to bear against one another, in which the through-passages in the connecting body and the fluid ducts in the stub axle are aligned with respect to one another and are sealingly connected to one another. In this case, the connecting body and the inner side of the stub axle may be provided with corresponding bearing surfaces which bear against one another. The through-passages of the connecting body and the fluid ducts of the stub axle each debouch in an opening on the bearing surfaces. The openings in the bearing surfaces are aligned with respect to one another and sealingly connected. The sealing can for example withstand a high pressure, such as a pressure of 70-80 bar. As a result thereof, hydraulic fluid can flow from the connecting body to the stub axle and vice versa substantially without any leaks.

It is possible for a first fluid duct to form a supply duct and for a second fluid duct to form a discharge duct, in which a first through-passage has a first through-opening which debouches at the end of said through-passage which is connected to the first fluid duct or supply duct, and in which a second through-passage has a second through-opening which debouches at the end of said through-passage which is connected to the second fluid duct or discharge duct, and in which a first connection opening forms an inflow opening, and in which the first through-opening forms an outflow opening, which is connected to the first connection opening via the first through-passage, and in which the second through-opening forms an inflow opening, and in which a second connection opening forms an outflow opening which is connected to the second through-opening via the second through-passage. Since the flow of hydraulic fluid through the hydraulic circuit can take place in two directions, the supply duct and the discharge duct may be reversed. In one direction of flow, the hydraulic motor forms an auxiliary drive during driving forwards, while the hydraulic motor in the opposite direction of flow forms an auxiliary drive during driving backwards or can produce additional brake force.

In one embodiment, the king pin determines a steering axis, in which the wheel hub is rotatable about a substantially horizontal axis of rotation, and in which the connection openings debouch in a direction which extends substantially transversely to a substantially vertical plane which extends parallel to the steering axis and the axis of rotation. The steering axis of the king pin is, for example, formed by a vertical or upstanding axis which runs, for example, substantially vertically. In this description, the term "transversely" is understood to mean at an angle of approximately 30-90° with respect to the vertical plane. The connection openings can extend forwards and/or backwards horizontally or at an angle. The connection openings are in this case for example horizontal or directed slightly upwards or downwards. Due to the fact that the connection openings debouch transversely, they are readily accessible for installation and maintenance purposes.

In this case, it is possible for a first connection opening to debouch in a first direction, in which a second connection opening debouches in a second direction, which is substantially opposite to the first direction. If the first and second directions enclose an angle which is greater than 90°, for example greater than 120°, these directions are opposite to one another. The first connection opening debouches, for example, to the front, while the second connection opening is directed to the back.

In this case, the first and second connection openings can debouch on either side of the steering axis of the king pin, that is to say on the front side and back side. As a result thereof, the connection openings between the king pin and the inner side of the stub axle are readily accessible from the front and from the rear. Despite the small installation space between the king pin and the inner side of the stub axle, the connection openings are therefore readily accessible for installation and maintenance purposes.

In one embodiment, the stub axle is provided with at least a third and/or fourth fluid duct each of which extends through the stub axle from the inner side to the outer side thereof, in which case the connecting body is provided with at least a third and/or fourth through-passage, each of said third and/or fourth through-passage, at one end thereof, being connected to in each case one of said third and/or fourth fluid ducts of the stub axle and in each case comprising a connection opening at the opposite end thereof.

During use of the auxiliary drive, a high pressure prevails in the hydraulic system, for example a pressure of 70-80 bar or more. As a result thereof, hydraulic fluid leaks from the plungers of the hydraulic motor and hydraulic fluid leaks into the annular space between the wheel hub and the outer side of the stub axle. When the auxiliary drive is switched off, a relatively small overpressure can be maintained in the hydraulic system, for example of 1 bar, so that the hydraulic system is on "standby". The slight overpressure also results in leakage flows which cool and clean the hydraulic system. The leakage flows are removed from the stub axle via the third and/or fourth fluid duct.

Therefore, the third fluid duct can form a first leakage outlet duct or flushing duct and a fourth fluid duct can form a second leakage outlet duct, in which the third through-passage has a third through-opening which debouches at the end of said through-passage which is connected to the third fluid duct, and in which the fourth through-passage has a fourth through-opening which debouches at the end of said through-passage which is connected to the fourth fluid duct, and in which the third connection opening forms an outflow opening, and in which the third through-opening forms an inflow opening which is connected to the third connection opening via the third through-passage, and in which the fourth through-opening forms an inflow opening, and in which the fourth connection opening forms an outflow opening which is connected to the fourth through-opening via the fourth through-passage.

In one embodiment, the connection openings of the third and fourth through-passages debouch in a direction which is substantially transverse to the substantially vertical plane which runs parallel to the steering axis and the axis of rotation. The third and fourth connection openings can, corresponding to the first and second connection openings of the connecting body, extend forwards and/or backwards horizontally or at an angle, while the connection openings are directed horizontally or slightly up or down. This is advantageous for installation and maintenance purposes.

In this case, it is possible for the connection opening of the third through-passage to debouch substantially in the same first direction as the connection opening of the first through-passage, in which the connection opening of the fourth through-passage debouches substantially in the same second direction as the connection opening of the second through-passage. The first and third connection openings are, for example, directed to the front, while the second and fourth connection openings debouch to the rear. In this case, the first and third connection openings can debouch at the front or back of the steering axis and the second and fourth connection openings at the opposite back and front, respectively, of the steering axis. As a result thereof, the four connection openings between the king pin and the inner side of the stub axle are readily accessible from the front and from the back.

The hydraulic motor can be configured in different ways. For example, the hydraulic motor is provided with an inner body which is attached to the outer side of the stub axle, and an annular outer body which is attached to the wheel hub, in which the inner body comprises several plungers which are distributed in the peripheral direction around the wheel hub, each of the plungers being radially displaceable by hydraulic pressure, and the outer body being provided on the radially inner side with a cam track which can be engaged by the plungers.

The invention also relates to a vehicle, such as a lorry or semitrailer, comprising a wheel suspension device as described above.

In one embodiment, the vehicle, for example a lorry, comprises a main drive and an auxiliary drive which can be switched on/off, in which the main drive is provided with an engine which is connected to wheels of a first axle via a mechanical drive connection, and in which the auxiliary drive is designed for driving at least one wheel of a second axle, and in which said wheel of the second axle is fitted on the wheel hub of the wheel suspension device, and in which the hydraulic motor of the wheel suspension device is actively connected to a hydraulic pump, which can be driven by the engine.

In this case, it is possible for the vehicle, for example a lorry, to be provided with a sensor for detecting the rotary speed of the first axle, in which the engine has an output shaft which is connected to the hydraulic pump, and in which the hydraulic pump can be controlled by means of a control device for controlling the volumetric flow of the hydraulic pump on the basis of a rotary speed of the first axle detected by the sensor. The first axle is for example the rear axle which is mechanically driven by the engine of the lorry.

The control device receives a signal from the sensor which corresponds to the current rotary speed of the first axle. If desired, the control device also receives a signal which corresponds to the desired rotary speed of the second axle which is driven by the hydraulic motor or motors. It may, for example, be desirable for the second axle to have the same rotary speed as the first axle or a slightly deviating rotary speed. On the basis of the received signals, the control device determines the volumetric flow of hydraulic fluid for supplying the hydraulic motor or motors of the second axle. The controllable pump is then set accordingly by the control device.

The invention furthermore relates to a method for assembling a wheel suspension device, comprising:
- providing a wheel suspension device for a vehicle, such as a lorry, comprising:
- an axle body,
- a king pin,
- a stub axle having an inner side and an outer side, in which the stub axle, on its inner side, is hingedly connected to the axle body by means of the king pin, and in which the stub axle is provided with at least two fluid ducts which extend through the stub axle from the inner side to the outer side thereof
- a wheel hub, which is rotatably connected to the stub axle, and
- a hydraulic motor, which is provided on the outer side of the stub axle, in which the hydraulic motor is designed to drive the wheel hub with respect to the stub axle, and in which the hydraulic motor is in fluid communication with the fluid ducts,
- providing a connecting body which is formed as a separate part and is provided with at least two through-passages, each of which comprises a through-opening at one end thereof and a connection opening at the opposite end thereof,
- fitting the connecting body between the king pin and the inner side of the stub axle, in which the through-openings of the through-passages are connected to in each case one of the fluid ducts of the stub axle, and
- connecting hydraulic lines to the connection openings of the connecting body.

The invention will now be described in more detail with reference to an exemplary embodiment illustrated in the drawing, in which:
Fig. 1 shows a diagrammatic view of a lorry which is provided with a main drive and a switchable hydraulic auxiliary drive;
Fig. 2 shows a diagrammatic cross-sectional view of a wheel suspension device according to the invention;
Fig. 3 shows a diagrammatic cut-away view of a hydraulic motor of the hydraulic auxiliary drive;
Fig. 4 shows a perspective view of the connecting body of the wheel suspension device illustrated in Fig. 2;
Fig. 5 shows a front view of the connecting body illustrated in Fig. 4;
Figs. 6a-6d show cross-sectional views along A-A, B-B, C-C and D-D in Fig. 5.

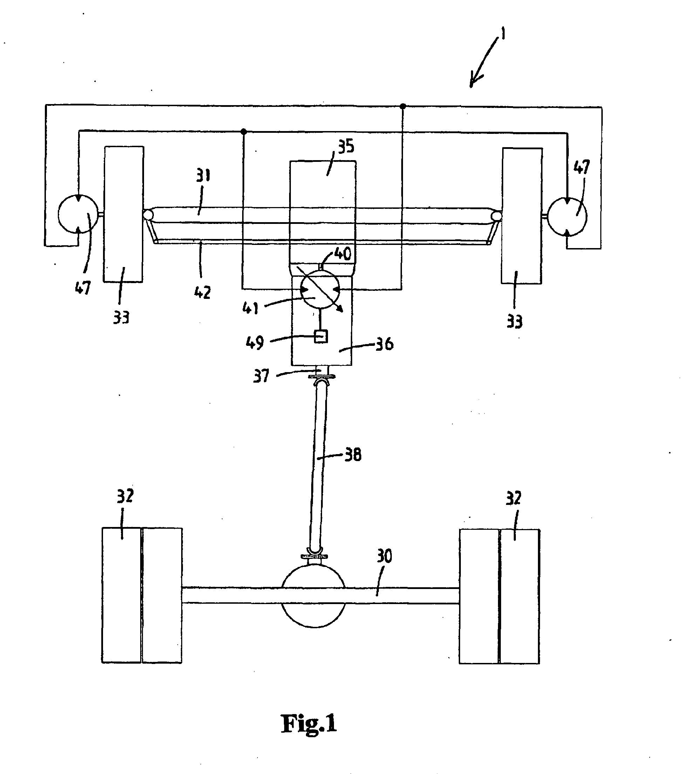

Fig. 1 diagrammatically shows a lorry or truck which is denoted overall by reference numeral 1. The lorry 1 comprises a rear axle 30 with rear wheels 32 and a front axle 31 with front wheels 33. The lorry 1 is provided with a main drive 35 which in this exemplary embodiment is designed as a diesel engine. The diesel engine 35 is connected to a gearbox 36, which has an output shaft 37. The output shaft 37 is coupled to the rear axle 30 via a mechanical connection 38.

The front wheels 33 are connected to the front axle 31 by means of a wheel suspension device. The front wheels 33 can be steered by pivoting the front wheels 33 about a substantially vertical steering axis. The steerable front wheels 33 are connected to one another by means of the knuckle arm 42.

The lorry 1 comprises a closed hydraulic system which forms an auxiliary drive for the front wheels 33. The auxiliary drive can be switched on and off. The diesel engine 35 comprises an output shaft 40 which is connected to a controllable hydraulic pump 41. The front wheels 33 are each provided with a hydraulic motor 47. The controllable hydraulic pump 41 is connected to the hydraulic motors 47 via lines and fittings. The direction of flow in the hydraulic system is reversible, so that the front wheels 33 can be driven forwards and backwards.

The hydraulic pump 41 receives a signal from a sensor for detecting the rotary speed of the rear axle 30 (not shown). A control device 49 controls the volumetric flow of the hydraulic pump 41 on the basis of the detected rotary speed of the rear axle 30 and the rotary speed of the output shaft 40 which depends on the rotary speed of the diesel engine 35. The rotary speed of the front wheels 33 can therefore be adapted to the rotary speed of the rear wheels 32.

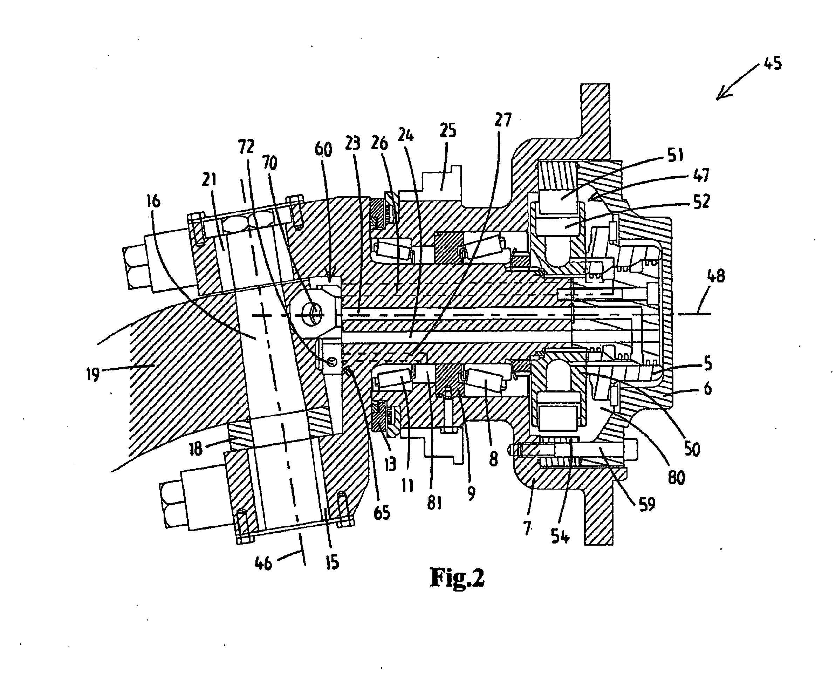

The wheel suspension device is illustrated in more detail in Fig. 2. The wheel suspension device 45 comprises an axle body 19 which in this exemplary embodiment is formed by one end of the front axle 31. By means of a king pin 16, the axle body 19 is connected to a stub axle 14 so as to be pivotable about the steering axis 46. The stub axle 14 has an axially inner side and an axially outer side. On its inner side, the stub axle 14 has bottom and top king pin supports, which are spaced apart. The king pin 16 runs through an opening in the axle body 19 and through two holes in the king pin supports which are aligned co-axially with respect to one another. The king pin 16 is mounted by means of two king pin bearings 15,21 and an axial bearing 18.

The inner side of the stub axle 14 thus faces the king pin 16. The opposite outer side of the stub axle 14 is provided with an axle member having an axial inner end and an axial outer end. A wheel hub 7 is rotatably mounted on the axle member by means of an inner bearing 11 and an outer bearing 8. On the wheel hub 7, a securing element 25 for a brake disc is provided.

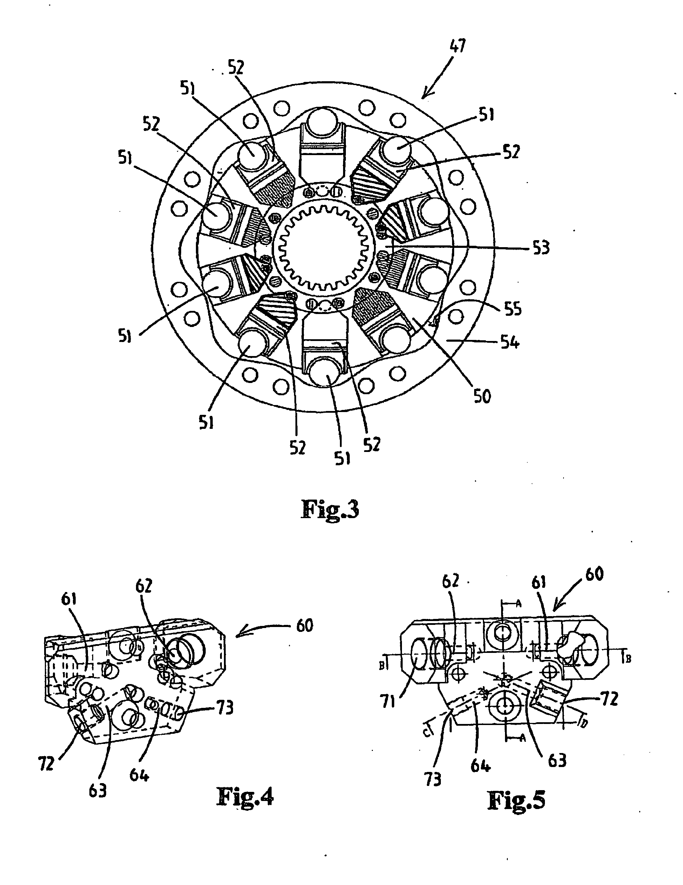

On the axially outer end of the axle element, the hydraulic motor 47 is fitted which is designed to drive the wheel hub 7 with respect to the axle member of the stub axle 14. The hydraulic motor 47 comprises an inner body 50 which is attached to the outer side of the stub axle 14, for example via a spline coupling (see also Fig. 3). The inner body 50 is provided with several plungers 52 which are distributed in the peripheral direction around the wheel hub 7. Each of the plungers 52 is radially displaceable by hydraulic pressure. On the radially outer end thereof, each plunger 52 has a bearing roller 51. An annular outer body 54 is attached to the wheel hub 7 (by means of bolts 59, see Fig. 2). On its radially inner side, the outer body 54 has a sinusoidal cam track 55 which can be engaged by the bearing rollers 51 of the plungers 52. Such a hydraulic motor is known per se and the operation thereof will therefore not be explained in more detail.

The stub axle 14 is provided with four fluid ducts 23,24,26,27 which extend through the stub axle 14 from the inner side to the outer side. The fluid ducts 26,27 are diagrammatically illustrated in Fig. 2 by means of dashed lines because they are not visible in the cross-sectional view.

Two of the four fluid ducts 23,26 open or debouch at the axially outer end of the axle member on the front thereof into a distributor 5 which distributes the hydraulic fluid over the plungers 52 of the hydraulic motor 4. The first fluid duct 23 forms a supply duct for supplying hydraulic fluid at high pressure. The hydraulic fluid is supplied via the distributor 5 to a number of plungers 52 which move radially outwards and are thereby supported on or abut against the cam track 55. At the same time, other plungers 52 move radially inwards, with hydraulic fluid being discharged via the distributor 5 and the second fluid duct 26. In this case, the second fluid duct 26 forms a discharge duct.

The plungers 52, the outer body 54 and a lid 6 delimit a space 80. During operation, a high pressure prevails in the space 80, for example 70-80 bar. This results in a leakage flow of hydraulic fluid past the plungers 52 to the space 80. The third fluid duct 24 forms a first leakage outlet duct or flushing duct which debouches into the space 80 on the outer side of the stub axle 14. The leakage flow is removed from space 80 via the third fluid duct 24 in the stub axle 14.

The annular space 81 between the axle member and the wheel hub 7 is sealed by a sealing ring 13. The sealing ring 13 can withstand, for example, a pressure of at most approximately 10 bar. Therefore, the annular space 81 is provided with a pressure-reducing ring 9 which reduces the pressure from the high pressure in the space 80 to a lower pressure. In Fig. 2, the pressure on the left-hand side of the pressure-reducing ring 9 is therefore lower than on the right-hand side. A leakage flow of hydraulic fluid flows past the pressure-reducing ring 9. The fourth fluid duct 27 debouches on the outer side of the stub axle 14 on the circumferential surface of the axle member into the space 81 between the wheel hub 7 and the stub axle 14. The fourth fluid duct 27 has a leakage outlet opening in the circumferential surface of the axle member of the stub axle 14. The hydraulic fluid which leaks from the pressure-reducing ring is discharged from the stub axle 14 via the fourth fluid duct.

Incidentally, when the auxiliary drive is switched off, a relatively small overpressure can be maintained in the hydraulic system, for example an overpressure of 1 bar. The hydraulic system is then in the "standby" position. The slight overpressure results in leakage flows which cool and clean the hydraulic system. These leakage flows can also be discharged via the third and fourth fluid ducts 24,27.

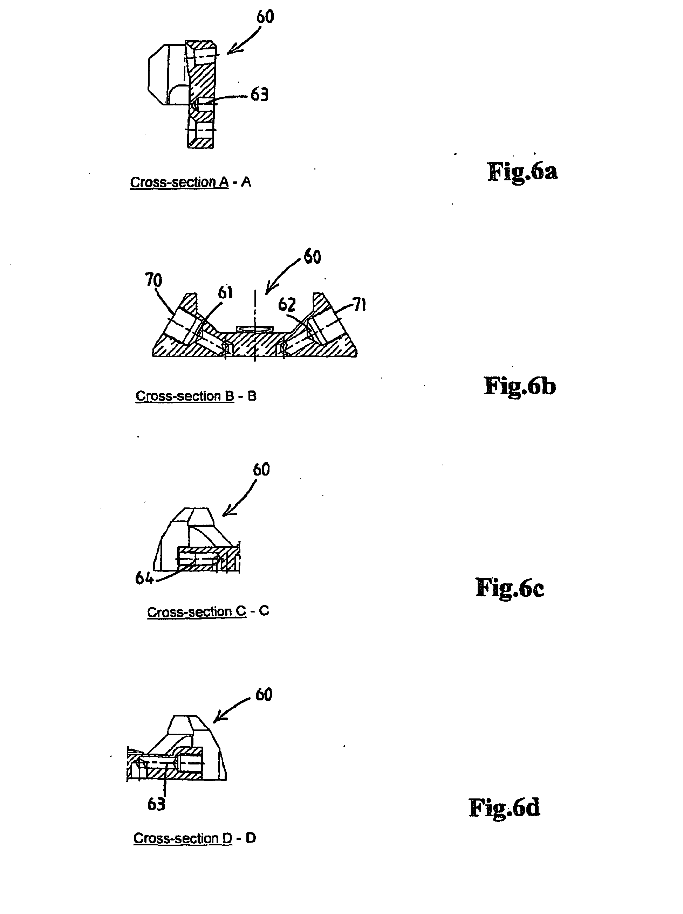

On the inner side of the stub axle 14, the fluid ducts 23,24,26,27 are connected to a connecting body 60, which is a separate part (see also Figs. 4, 5 and 6a-6d). The connecting body 60 comprises a bearing surface 65 which bears against a bearing surface of the inner side of the stub axle 14. In this exemplary embodiment, the connecting body 60 has four securing holes through which bolts are inserted for securing the connecting body 60 to the stub axle 14. The connecting body 60 is, for example, formed by a metal moulded piece.

Four through-passages 61,62,63,64 are provided in the connecting body 60. Each through-passage 61,62,63,64 has, at an end which debouches into the bearing surface 65, a through-opening and at the opposite end a connection opening 70,71,72,73. The through-openings of the through-passages 61,62,63,64 are aligned with respect to the fluid ducts 23,24,26,27 in the stub axle 14 and sealingly connected with the latter. In this case, the seals can withstand high pressure which prevails in the hydraulic system during operation.

As is illustrated in Fig. 2, two of the connection openings 70,72 debouch in front of the king pin 16. The other two connection openings 71,73 face backwards and debouch behind the king pin 16. As a result thereof, the connection openings 70,71,72,73 are readily accessible for installation and maintenance purposes. Hydraulic lines can easily be connected to the connection openings 70,71,72,73 (not shown).

The invention is not limited to the exemplary embodiment illustrated in the figures. Those skilled in the art can make various modifications without departing from the scope of the invention as defined by the claims. In addition, this wheel suspension device can not only be used with a lorry or semitrailer, but also with other vehicles, such as a digging machine. The vehicle may have a main drive, with the hydraulic drive forming an auxiliary drive which can be switched on/off. The main drive of the vehicle is, for example, a combustion engine, an electric motor or a hybrid drive.

## Claims

1. Wheel suspension device (45) for a vehicle, such as a lorry (1), comprising:
- an axle body (19),
- a king pin (16), which defines a steering axis (46),
- a stub axle (14) having an inner side and an outer side, in which the stub axle (14) is hingedly connected on its inner side to the axle body (19) by means of the king pin (16), and in which the stub axle (14) has bottom and top king pin supports, which are spaced apart, and in which the king pin (16) runs through an opening in the axle body (19) and through two holes in the king pin supports which are aligned co-axially with respect to one another,
- a wheel hub (7), which is rotatably connected to the stub axle (14) about a substantially horizontal axis of rotation (48), and **characterised in that**
- the stub axle (14) is provided with at least two fluid ducts (23,26) which extend through the stub axle (14) from the inner side to the outer side thereof,
- a hydraulic motor (47), is provided on the outer side of the stub axle (14), in which the hydraulic motor (47) is designed to drive the wheel hub (7) with respect to the stub axle (14), and in which the hydraulic motor (47) is in fluid communication with the fluid ducts (23,26),
- a connecting body (60) is provided which is fitted between the king pin (16) and the inner side of the stub axle (14), in which the connecting body (60) is a separate part, and in which the connecting body (60) is provided with at least two through-passages (61,62), in which each of the through-passages (61,62) is connected at an end thereof to in each case one of the fluid ducts (23,26) of the stub axle and comprises, on the opposite end thereof, in each case one connection opening (70,71), and
- the connection openings (70,71) open in a direction which extends substantially transversely to a substantially vertical plane which extends parallel to the steering axis (46) and the axis of rotation (48).

2. Wheel suspension device according to claim 1, in which the connecting body (60) is formed by a substantially solid, block-shaped body which is provided with the through-passages (61,62).

3. Wheel suspension device according to claim 1 or 2, in which the connecting body (60) and the inner side of the stub axle (14) bear against one another, and in which the through-passages (61,62) in the connecting body (60) and the fluid ducts (23,26) in the stub axle (14) are aligned with respect to one another and are sealingly connected to one another.

4. Wheel suspension device according to one of the preceding claims, in which a first fluid duct (23) forms a supply duct and a second fluid duct (26) forms a discharge duct, and in which a first through-passage (61) has a first through-opening which opens at the end of said through-passage (61) which is connected to the first fluid duct (23), and in which a second through-passage (62) has a second through-opening which opens at the end of said through-passage (62) which is connected to the second fluid duct (26), and in which a first connection opening (70) forms an inflow opening, and in which the first through-opening forms an outflow opening, which is connected to the first connection opening (70) via the first through-passage (61), and in which the second through-opening forms an inflow opening, and in which a second connection opening (71) forms an outflow opening which is connected to the second through-opening via the second through-passage (62).

5. Wheel suspension device according to one of the preceding claims, in which a first connection opening (70) opens in a first direction, and in which a second connection opening (71) opens in a second direction, which is substantially opposite to the first direction.

6. Wheel suspension device according to one of the preceding claims, in which the first and second connection openings (70,71) open on either side of the steering axis (46) of the king pin (16)..

7. Wheel suspension device according to one of the preceding claims, in which the stub axle (14) is provided with at least a third fluid duct (24) which extends through the stub axle (14) from the inner side to the outer side thereof, and in which the connecting body (60) is provided with at least a third through-passage (63), in which the third through-passage (63), at one end thereof, is connected to the third fluid duct (24) of the stub axle (14) and comprises a third connection opening (72) at the opposite end thereof.

8. Wheel suspension device according to claim 7, in which the stub axle (14) is provided with at least a fourth fluid duct (27) which extends through the stub axle (14) from the inner side to the outer side thereof, and in which the connecting body (60) is provided with at least a fourth through-passage (64), in which the fourth through-passage (64), at one end thereof, is connected to the fourth fluid duct (27) of the stub axle (14) and comprises a fourth connection opening (73) at the opposite end thereof.

9. Wheel suspension device according to claim 8, in which the connection openings (72,73) of the third and fourth through-passages (63,64) open in a direction which extends substantially transversely with respect to the substantially vertical plane which runs parallel to the steering axis (46) and the axis of rotation (48).

10. Wheel suspension device according to one of the preceding claims, in which the hydraulic motor (47) is provided with an inner body (53), which is attached to the outer side of the stub axle (14), and an annular outer body (54), which is attached to the wheel hub (7), and in which the inner body (53) comprises several plungers (52) which are distributed in the peripheral direction around the wheel hub (7), each of the plungers (52) being radially displaceable by hydraulic pressure, and the outer body (54) being provided on the radially inner side with a cam track (55) which can be engaged by the plungers (52).

11. Wheel suspension device according to one of the preceding claims, in which the outer side of the stub axle (14) is provided with an axle member having an axial inner end and an axial outer end, in which the wheel hub (7) is rotatably mounted on the axle member, and in which the hydraulic motor (47) is fitted on the axially outer end of the axle member, and in which the first fluid duct (23) and the second fluid duct (26) on the outer side of the stub axle (14) open on a front side of the axially outer end of the axle member.

12. Vehicle, such as a lorry or semitrailer, comprising a wheel suspension device (45) according to one of the preceding claims.

13. Vehicle according to claim 12, in which the lorry (1) comprises a main drive and an auxiliary drive which can be switched on/off, in which the main drive is provided with an engine (35) which is connected to wheels (32) of a first axle (30) via a mechanical drive connection (36,37,38), and in which the auxiliary drive is designed for driving at least one wheel (33) of a second axle (31), and in which said wheel (33) of the second axle (31) is fitted on the wheel hub (7) of the wheel suspension device (45), and in which the hydraulic motor (47) of the wheel suspension device (45) is connected to a hydraulic pump (41), which can be driven by the engine (35).

14. Vehicle according to claim 13, comprising a sensor for detecting the rotary speed of the first axle (30), in which the engine (35) has an output shaft (40) which is connected to the hydraulic pump (41), and in which the hydraulic pump (41) can be controlled by means of a control device (49) for controlling the volumetric flow of the hydraulic pump (41) on the basis of a rotary speed of the first axle (30) detected by the sensor.

15. Method for assembling a wheel suspension device (45), comprising:
- providing a wheel suspension device (45) for a vehicle, such as a lorry (1), comprising:
- an axle body (19),
- a king pin (16), which defines a steering axis (46),
- a stub axle (14) having an inner side and an outer side, in which the stub axle (14) is hingedly connected on its inner side to the axle body (19) by means of the king pin (16), and in which the stub axle (14) has bottom and top king pin supports, which are spaced apart, and in which the king pin (16) runs through an opening in the axle body (19) and through two holes in the king pin supports which are aligned co-axially with respect to one another,
- a wheel hub (7), which is rotatably connected to the stub axle (14) about a substantially horizontal axis of rotation (48), and **characterised in that**
- the stub axle (14) is provided with at least two fluid ducts (23,26) which extend through the stub axle (14) from the inner side to the outer side thereof,
- a hydraulic motor (47), is provided on the outer side of the stub axle (14), in which the hydraulic motor (47) is designed to drive the wheel hub (7) with respect to the stub axle (14), and in which the hydraulic motor (47) is in fluid communication with the fluid ducts (23,26),
**and wherein** the method comprises:
- providing a connecting body (60) which is formed as a separate part and is provided with at least two through-passages (61,62), each of which comprises a through-opening at one end thereof and a connection opening (70, 71) at the opposite end thereof,
- fitting the connecting body (60) between the king pin (16) and the inner side of the stub axle (14), in which the through-openings of the through-passages (61, 62) are connected to in each case one of the fluid ducts (23, 26) of the stub axle (14), in which the connection openings (70,71) open in a direction which extends substantially transversely to a substantially vertical plane which extends parallel to the steering axis (46) and the axis of rotation (48), and
- connecting hydraulic lines to the connection openings (70, 71) of the connecting body (60).

## Patentansprüche

1. Radaufhängungsvorrichtung (45) für ein Fahrzeug, wie einen Lastwagen (1), die aufweist:
- einen Achsschaft (19),
- einen Achsschenkelbolzen (16), der eine Lenkachse (46) definiert,
- einen Achsschenkel (14) mit einer Innenseite und einer Außenseite, wobei der Achsschenkel (14) auf seiner Innenseite mittels des Achsschenkelbolzens (16) gelenkig mit dem Achsschaft (19) verbunden ist, und wobei der Achsschenkel (14) untere und obere Achsschenkelbolzen-Träger hat, die beabstandet sind, und wobei der Achsschenkelbolzen (16) durch eine Öffnung im Achsschaft (19) und durch zwei Löcher in den Achsschenkelbolzen-Trägern geht, die koaxial zueinander ausgerichtet sind,
- eine Radnabe (7), die um eine im Wesentlichen waagrechte Drehachse (48) drehbar mit dem Achsschenkel (14) verbunden ist,
und **dadurch gekennzeichnet, dass**
- der Achsschenkel (14) mit mindestens zwei Fluidkanälen (23, 26) versehen ist, die sich durch den Achsschenkel (14) von seiner Innenseite zu seiner Außenseite erstrecken,
- ein Hydraulikmotor (47) an der Außenseite des Achsschenkels (14) vorgesehen ist, wobei der Hydraulikmotor (47) dazu bestimmt ist, die Radnabe (7) bezüglich des Achsschenkels (14) anzutreiben, und wobei der Hydraulikmotor (47) mit den Fluidkanälen (23, 26) in Fluidverbindung steht,
- ein Verbindungskörper (60) vorgesehen ist, der zwischen dem Achsschenkelbolzen (16) und der Innenseite des Achsschenkels (14) eingepasst ist, wobei der Verbindungskörper (60) ein getrenntes Bauteil ist, und wobei der Verbindungskörper (60) mit mindestens zwei Durchgängen (61, 62) versehen ist, wobei jeder der Durchgänge (61, 62) an einem seiner Enden in jedem Fall mit einem der Fluidkanäle (23, 26) des Achsschenkels verbunden ist und an seinem entgegengesetzten Ende in jedem Fall eine Verbindungsöffnung (70, 71) aufweist, und
- die Verbindungsöffnungen (70, 71) sich in einer Richtung öffnen, die sich im Wesentlichen quer zu einer im Wesentlichen senkrechten Ebene erstreckt, die sich parallel zur Lenkachse (46) und zur Drehachse (48) erstreckt.

2. Radaufhängungsvorrichtung nach Anspruch 1, wobei der Verbindungskörper (60) von einem im Wesentlichen massiven blockförmigen Körper geformt wird, der mit den Durchgängen (61, 62) versehen ist.

3. Radaufhängungsvorrichtung nach Anspruch 1 oder 2, wobei der Verbindungskörper (60) und die Innenseite des Achsschenkels (14) gegeneinander anliegen, und wobei die Durchgänge (61, 62) im Verbindungskörper (60) und die Fluidkanäle (23, 26) im Achsschenkel (14) zueinander ausgerichtet und dicht miteinander verbunden sind.

4. Radaufhängungsvorrichtung nach einem der vorhergehenden Ansprüche, wobei ein erster Fluidkanal (23) einen Zufuhrkanal und ein zweiter Fluidkanal (26) einen Auslasskanal formt, und wobei ein erster Durchgang (61) eine erste Durchgangsöffnung hat, die sich an dem Ende des Durchgangs (61) öffnet, das mit dem ersten Fluidkanal (23) verbunden ist, und wobei ein zweiter Durchgang (62) eine zweite Durchgangsöffnung hat, die sich an dem Ende des Durchgangs (62) öffnet, das mit dem zweiten Fluidkanal (26) verbunden ist, und wobei eine erste Verbindungsöffnung (70) eine Einströmöffnung formt, und wobei die erste Durchgangsöffnung eine Ausströmöffnung formt, die mit der ersten Verbindungsöffnung (70) über den ersten Durchgang (61) verbunden ist, und wobei die zweite Durchgangsöffnung eine Einströmöffnung formt, und wobei eine zweite Verbindungsöffnung (71) eine Ausströmöffnung formt, die mit der zweiten Durchgangsöffnung über den zweiten Durchgang (62) verbunden ist.

5. Radaufhängungsvorrichtung nach einem der vorhergehenden Ansprüche, wobei eine erste Verbindungsöffnung (70) sich in einer ersten Richtung öffnet, und wobei eine zweite Verbindungsöffnung (71) sich in einer zweiten Richtung öffnet, die im Wesentlichen zur ersten Richtung entgegengesetzt liegt.

6. Radaufhängungsvorrichtung nach einem der vorhergehenden Ansprüche, wobei die erste und die zweite Verbindungsöffnungen (70, 71) sich auf beiden Seiten der Lenkachse (46) des Achsschenkelbolzens (16) öffnen.

7. Radaufhängungsvorrichtung nach einem der vorhergehenden Ansprüche, wobei der Achsschenkel (14) mit mindestens einem dritten Fluidkanal (24) versehen ist, der sich durch den Achsschenkel (14) von seiner Innenseite zu seiner Außenseite erstreckt, und wobei der Verbindungskörper (60) mit mindestens einem dritten Durchgang (63) versehen ist, wobei der dritte Durchgang (63) an einem seiner Enden mit dem dritten Fluidkanal (24) des Achsschenkels (14) verbunden ist und eine dritte Verbindungsöffnung (72) an seinem entgegengesetzten Ende aufweist.

8. Radaufhängungsvorrichtung nach Anspruch 7, wobei der Achsschenkel (14) mit mindestens einem vierten Fluidkanal (27) versehen ist, der sich durch den Achsschenkel (14) von seiner Innenseite zu seiner Außenseite erstreckt, und wobei der Verbindungskörper (60) mit mindestens einem vierten Durchgang (64) versehen ist, wobei der vierte Durchgang (64) an einem seiner Enden mit dem vierten Fluidkanal (27) des Achsschenkels (14) verbunden ist und eine vierte Verbindungsöffnung (73) an seinem entgegengesetzten Ende aufweist.

9. Radaufhängungsvorrichtung nach Anspruch 8, wobei die Verbindungsöffnungen (72, 73) der dritten und vierten Durchgänge (63, 64) sich in einer Richtung öffnen, die sich im Wesentlichen quer bezüglich der im Wesentlichen senkrechten Ebene erstreckt, die parallel zur Lenkachse (46) und zur Drehachse (48) verläuft.

10. Radaufhängungsvorrichtung nach einem der vorhergehenden Ansprüche, wobei der Hydraulikmotor (47) mit einem inneren Körper (53), der an der Außenseite des Achsschenkels (14) befestigt ist, und einem ringförmigen äußeren Körper (54) versehen ist, der an der Radnabe (7) befestigt ist, und wobei der innere Körper (53) mehrere Kolben (52) aufweist, die in der Umfangsrichtung um die Radnabe (7) herum verteilt sind, wobei jeder der Kolben (52) durch Hydraulikdruck radial verschiebbar ist, und der äußere Körper (54) auf der radial inneren Seite mit einer Nockenbahn (55) versehen ist, in die die Kolben (52) eingreifen können.

11. Radaufhängungsvorrichtung nach einem der vorhergehenden Ansprüche, wobei die Außenseite des Achsschenkels (14) mit einem Achselement versehen ist, das ein axial inneres Ende und ein axial äußeres Ende hat, wobei die Radnabe (7) drehend auf das Achselement montiert ist, und wobei der Hydraulikmotor (47) auf das axial äußere Ende des Achselements eingebaut ist, und wobei der erste Fluidkanal (23) und der zweite Fluidkanal (26) an der Außenseite des Achsschenkels (14) sich an einer Vorderseite des axial äußeren Endes des Achselements öffnen.

12. Fahrzeug, wie ein Lastwagen oder Sattelschlepper, das eine Radaufhängungsvorrichtung (45) nach einem der vorhergehenden Ansprüche aufweist.

13. Fahrzeug nach Anspruch 12, wobei der Lastwagen (1) einen Hauptantrieb und einen Hilfsantrieb aufweist, der ein- und ausgeschaltet werden kann, wobei der Hauptantrieb mit einem Motor (35) versehen ist, der über eine mechanische Antriebsverbindung (36, 37, 38) mit Rädern (32) einer ersten Achse (30) verbunden ist, und wobei der Hilfsantrieb dazu bestimmt ist, mindestens ein Rad (33) einer zweiten Achse (31) anzutreiben, und wobei das Rad (33) der zweiten Achse (31) auf die Radnabe (7) der Radaufhängungsvorrichtung (45) eingebaut ist, und wobei der Hydraulikmotor (47) der Radaufhängungsvorrichtung (45) mit einer Hydraulikpumpe (41) verbunden ist, die vom Motor (35) angetrieben werden kann.

14. Fahrzeug nach Anspruch 13, das einen Sensor zur Erfassung der Drehgeschwindigkeit der ersten Achse (30) aufweist, wobei der Motor (35) eine Abtriebswelle (40) hat, die mit der Hydraulikpumpe (41) verbunden ist, und wobei die Hydraulikpumpe (41) mittels einer Steuervorrichtung (49) zur Steuerung des Volumenstroms der Hydraulikpumpe (41) auf der Basis einer vom Sensor erfassten Drehgeschwindigkeit der ersten Achse (30) gesteuert werden kann.

15. Verfahren zum Zusammenbau einer Radaufhängungsvorrichtung (45), das aufweist:
- die Bereitstellung einer Radaufhängungsvorrichtung (45) für ein Fahrzeug, wie einen Lastwagen (1), die aufweist:
- einen Achsschaft (19),
- einen Achsschenkelbolzen (16), der eine Lenkachse (46) definiert,
- einen Achsschenkel (14) mit einer Innenseite und einer Außenseite, wobei der Achsschenkel (14) an seiner Innenseite mittels des Achsschenkelbolzens (16) gelenkig mit dem Achsschaft (19) verbunden ist, und wobei der Achsschenkel (14) untere und obere Achsschenkelbolzen-Träger hat, die beabstandet sind, und wobei der Achsschenkelbolzen (16) durch eine Öffnung im Achsschaft (19) und durch zwei Löcher in den Achsschenkelbolzen-Trägern geht, die koaxial zueinander ausgerichtet sind,
- eine Radnabe (7), die um eine im Wesentlichen waagrechte Drehachse (48) drehend mit dem Achsschenkel (14) verbunden ist,
und **dadurch gekennzeichnet, dass**
- der Achsschenkel (14) mit mindestens zwei Fluidkanälen (23, 26) versehen ist, die sich durch den Achsschenkel (14) von dessen Innenseite zu seiner Außenseite erstrecken,
- ein Hydraulikmotor (47) an der Außenseite des Achsschenkels (14) vorgesehen ist, wobei der Hydraulikmotor (47) dazu bestimmt ist, die Radnabe (7) bezüglich des Achsschenkels (14) anzutreiben, und wobei der Hydraulikmotor (47) mit den Fluidkanälen (23, 26) in Fluidverbindung steht,
und wobei das Verfahren aufweist:
- die Bereitstellung eines Verbindungskörpers (60), der als ein getrenntes Bauteil geformt und mit mindestens zwei Durchgängen (61, 62) versehen ist, von denen jeder eine Durchgangsöffnung an einem seiner Enden und eine Verbindungsöffnung (70, 71) an seinem entgegengesetzten Ende aufweist,
- den Einbau des Verbindungskörpers (60) zwischen dem Achsschenkelbolzen (16) und der Innenseite des Achsschenkels (14), wobei die Durchgangsöffnungen der Durchgänge (61, 62) in jedem Fall mit einem der Fluidkanäle (23, 26) des Achsschenkels (14) verbunden sind, wobei die Verbindungsöffnungen (70,71) sich in einer Richtung öffnen, die sich im Wesentlichen quer zu einer im Wesentlichen senkrechten Ebene erstreckt, die sich parallel zur Lenkachse (46) und zur Drehachse (48) erstreckt, und
- die Verbindung von Hydraulikleitungen mit den Verbindungsöffnungen (70, 71) des Verbindungskörpers (60).

## Revendications

1. Dispositif de suspension de roue (45) pour un véhicule, tel qu'un camion (1), comprenant :
un corps d'essieu (19),
un pivot de fusée (16) qui définit un axe de direction (46),
un demi-essieu (14) ayant un côté interne et un côté externe, dans lequel le demi-essieu (14) est raccordé de manière articulée sur son côté interne au corps d'essieu (19) au moyen du pivot de fusée (16), et dans lequel le demi-essieu (14) a des supports de pivot de fusée inférieur et supérieur qui sont espacés, et dans lequel le pivot de fusée (16) s'étend à travers une ouverture dans le corps d'essieu (19) et à travers deux trous dans les supports de pivot de fusée qui sont alignés de manière coaxiale l'un par rapport à l'autre,
un moyeu de roue (7) qui est raccordé en rotation au demi-essieu (14) autour d'un axe de rotation sensiblement horizontal (48), et **caractérisé en ce que** :
le demi-essieu (14) est prévu avec au moins deux conduits de fluide (23, 26) qui s'étendent à travers le demi-essieu (14) du côté interne à son côté externe,
un moteur hydraulique (47) est prévu sur le côté externe du demi-essieu (14), dans lequel le moteur hydraulique (47) est conçu pour entraîner le moyeu de roue (7) par rapport au demi-essieu (14), et dans lequel le moteur hydraulique (47) est en communication de fluide avec les conduits de fluide (23, 26),
un corps de raccordement (60) qui est monté entre le pivot de fusée (16) et le côté interne du demi-essieu (14), dans lequel le corps de raccordement (60) est une partie séparée, et dans lequel le corps de raccordement (60) est prévu avec au moins deux passages débouchants (61, 62), dans lequel chacun des passages débouchants (61, 62) est raccordé au niveau de son extrémité, à, dans chaque cas, l'un des conduits de fluide (23, 26) du demi-essieu et comprend, sur son extrémité opposée, dans chaque cas, une ouverture de raccordement (70, 71), et
les ouvertures de raccordement (70, 71) s'ouvrent dans une direction qui s'étend de manière sensiblement transversale à un plan sensiblement vertical qui s'étend parallèlement à l'axe de direction (46) et l'axe de rotation (48).

2. Dispositif de suspension de roue selon la revendication 1, dans lequel le corps de raccordement (60) est formé par un corps en forme de bloc sensiblement solide qui est prévu avec les passages débouchants (61, 62).

3. Dispositif de suspension de roue selon la revendication 1 ou 2, dans lequel le corps de raccordement (60) et le côté interne du demi-essieu (14) s'appuient l'un contre l'autre, et dans lequel les passages débouchants (61, 62) dans le corps de raccordement (60) et les conduits de fluide (23, 26) dans le demi-essieu (14) sont alignés les uns par rapport aux autres et sont raccordés de manière étanche les uns aux autres.

4. Dispositif de suspension de roue selon l'une des revendications précédentes, dans lequel un premier conduit de fluide (23) forme un conduit d'alimentation et un deuxième conduit de fluide (26) forme un conduit de décharge, et dans lequel un premier passage débouchant (61) a une première ouverture débouchante qui s'ouvre au niveau de l'extrémité dudit passage débouchant (61) qui est raccordée au premier conduit de fluide (23) et dans lequel un deuxième passage débouchant (62) a une seconde ouverture débouchante qui s'ouvre au niveau de l'extrémité dudit passage débouchant (62) qui est raccordé au deuxième conduit de fluide (26), et dans lequel une première ouverture de raccordement (70) forme une ouverture d'entrée et dans lequel la première ouverture débouchante forme une ouverture de sortie, qui est raccordée à la première ouverture de raccordement (70) via le premier passage débouchant (61) et dans lequel la seconde ouverture débouchante forme une ouverture d'entrée et dans lequel une deuxième ouverture de raccordement (71) forme une ouverture de sortie qui est raccordée à la seconde ouverture débouchante via le deuxième passage débouchant (62).

5. Dispositif de suspension de roue selon l'une des revendications précédentes, dans lequel une première ouverture de raccordement (70) s'ouvre dans une première direction et dans lequel une deuxième ouverture de raccordement (71) s'ouvre dans une seconde direction qui est sensiblement opposée à la première direction.

6. Dispositif de suspension de roue selon l'une des revendications précédentes, dans lequel les première et seconde ouvertures de raccordement (70, 71) s'ouvrent de chaque côté de l'axe de direction (46) du pivot de fusée (16).

7. Dispositif de suspension de roue selon l'une des revendications précédentes, dans lequel le demi-essieu (14) est prévu avec au moins un troisième conduit de fluide (24) qui s'étend à travers le demi-essieu (14) du côté interne à son côté externe, et dans lequel le corps de raccordement (60) est prévu avec au moins un troisième passage débouchant (63), dans lequel le troisième passage débouchant (63), au niveau de son extrémité, est raccordé au troisième conduit de fluide (24) du demi-essieu (14) et comprend une troisième ouverture de raccordement (72) au niveau de son extrémité opposée.

8. Dispositif de suspension de roue selon la revendication 7, dans lequel le demi-essieu (14) est prévu avec au moins un quatrième conduit de fluide (27) qui s'étend à travers le demi-essieu (14) de son côté interne jusqu'à son côté externe, et dans lequel le corps de raccordement (60) est prévu avec au moins un quatrième passage débouchant (64), dans lequel le quatrième passage débouchant (64) au niveau de son extrémité, est raccordé au quatrième conduit de fluide (27) du demi-essieu (14) et comprend une quatrième ouverture de raccordement (73) au niveau de son extrémité opposée.

9. Dispositif de suspension de roue selon la revendication 8, dans lequel les ouvertures de raccordement (72, 73) des troisième et quatrième passages débouchants (63, 64) s'ouvrent dans une direction qui s'étend de manière sensiblement transversale par rapport au plan sensiblement vertical qui s'étend parallèlement à l'axe de direction (46) et à l'axe de rotation (48).

10. Dispositif de suspension de roue selon l'une des revendications précédentes, dans lequel le moteur hydraulique (47) est prévu avec un corps interne (53) qui est fixé au côté externe du demi-essieu (14), et un corps externe annulaire (54) qui est fixé au moyeu de roue (7) et dans lequel le corps interne (53) comprend plusieurs pistons plongeurs (52) qui sont répartis dans la direction périphérique autour du moyeu de roue (7), chacun des pistons plongeurs (52) pouvant être déplacé de manière radiale par la pression hydraulique, et le corps externe (54) étant prévu sur le côté radialement interne avec une rampe de guidage (55) qui peut être mise en prise par les pistons plongeurs (52).

11. Dispositif de suspension de roue selon l'une des revendications précédentes, dans lequel le côté externe du demi-essieu (14) est prévu avec un élément d'essieu ayant une extrémité interne axiale et une extrémité externe axiale, dans lequel le moyeu de roue (7) est monté de manière rotative sur l'élément d'essieu, et dans lequel le moteur hydraulique (47) est monté sur l'extrémité radialement externe de l'élément d'essieu, et dans lequel le premier conduit de fluide (23) et le deuxième conduit de fluide (26) sur le côté externe du demi-essieu (14) s'ouvrent sur un côté avant de l'extrémité axialement externe de l'élément d'essieu.

12. Véhicule, tel qu'un camion ou semi-remorque, comprenant un dispositif de suspension de roue (45) selon l'une des revendications précédentes.

13. Véhicule selon la revendication 12, dans lequel le camion (1) comprend un entraînement principal et un entraînement auxiliaire qui peuvent être mis en marche/arrêtés, dans lequel l'entraînement principal est prévu avec un moteur (35) qui est raccordé aux roues (32) d'un premier essieu (30) via un raccordement d'entrainement mécanique (36, 37, 38), et dans lequel l'entraînement auxiliaire est conçu pour entraîner au moins une roue (33) d'un deuxième essieu (31), et dans lequel ladite roue (33) du deuxième essieu (31) est montée sur le moyeu de roue (7) du dispositif de suspension de roue (45), et dans lequel le moteur hydraulique (47) du dispositif de suspension de roue (45) est raccordé à une pompe hydraulique (41) qui peut être entraînée par le moteur (35).

14. Véhicule selon la revendication 13, comprenant un capteur pour détecter la vitesse de rotation du premier essieu (30), dans lequel le moteur (35) a un arbre de sortie (40) qui est raccordé à la pompe hydraulique (41), et dans lequel la pompe hydraulique (41) peut être commandée au moyen d'un dispositif de commande (49) pour réguler l'écoulement volumétrique de la pompe hydraulique (41) en fonction d'une vitesse de rotation du premier essieu (30) détectée par le capteur.

15. Procédé pour assembler un dispositif de suspension de roue (45), comprenant les étapes consistant à :
prévoir un dispositif de suspension de roue (45) pour un véhicule, tel qu'un camion (1), comprenant :
un corps d'essieu (19),
un pivot de fusée (16) qui définit un axe de direction (46),
un demi-essieu (14) ayant un côté interne et un côté externe, dans lequel le demi-essieu (14) est raccordé de manière articulée sur son côté interne au corps d'essieu (19) au moyen du pivot de fusée (16) et dans lequel le demi-essieu (14) a des supports de pivot de fusée inférieur et supérieur qui sont espacés, et dans lequel le pivot de fusée (16) s'étend à travers une ouverture dans le corps d'essieu (19) et à travers deux trous dans les supports de pivot de fusée qui sont alignés de manière coaxiale l'un par rapport à l'autre,
un moyeu de roue (7) qui est raccordé en rotation au demi-essieu (14) autour d'un axe de rotation sensiblement horizontal (48), et caractérisé en ce qui :
le demi-essieu (14) est prévu avec au moins deux conduits de fluide (23, 26) qui s'étendent à travers le demi-essieu (14) à partir d'un côté interne jusqu'à son côté externe,
un moteur hydraulique (47) est prévu sur le côté externe du demi-essieu (14), dans lequel le moteur hydraulique (47) est conçu pour entraîner le moyeu de roue (7) par rapport au demi-essieu (14), et dans lequel le moteur hydraulique (47) est en communication de fluide avec les conduits de fluide (23, 26),
et dans lequel le procédé comprend les étapes consistant à :
prévoir un corps de raccordement (60) qui est formé comme une pièce séparée et est prévu avec au moins deux passages débouchants (61, 62), dont chacun comprend une ouverture débouchante au niveau de son extrémité et une ouverture de raccordement (70, 71) au niveau de son extrémité opposée,
monter le corps de raccordement (60) entre le pivot de fusée (16) et le côté interne du demi-essieu (14), dans lequel les ouvertures débouchantes des passages débouchants (61, 62) sont raccordées à, dans chaque cas, l'un des conduits de fluide (23, 26) du demi-essieu (14), dans lequel les ouvertures de raccordement (70, 71) s'ouvrent dans une direction qui s'étend de manière sensiblement transversale vers un plan sensiblement vertical qui s'étend parallèlement à l'axe de direction (46) et l'axe de rotation (48), et
raccorder des conduites hydrauliques aux ouvertures de raccordement (70, 71) du corps de raccordement (60).
